# EUROPEAN PATENT APPLICATION

(11) **EP 3 176 864 A1**
(43) Date of publication of application: **07.06.2017**
(21) Application number: 15827344.1
(22) Date of filing: 31.07.2015
(51) Int. Cl.: H01M 10/0568, H01G 11/60, H01G 11/62, H01G 11/64, H01M 6/16, H01M 10/052, H01M 10/0567, H01M 10/0569

(54) **NON-AQUEOUS ELECTROLYTE AND POWER STORAGE DEVICE USING SAME**

(30) Priority: 01.08.2014 JP 2014157709; 24.12.2014 JP 2014260848
(71) Applicant: UBE Industries, Ltd., Ube-shi, Yamaguchi 755-8633 (JP)
(72) Inventor: ABE, Koji, Ube-shi Yamaguchi 755-8633 (JP); KONDO, Masahide, Ube-shi Yamaguchi 755-8633 (JP)
(74) Representative: Gille Hrabal
(86) International application number: PCT/JP2015/071840
(87) International publication number: WO 2016/017809

(57) **Abstract**

A nonaqueous electrolytic solution where an electrolyte salt is dissolved to a nonaqueous solvent, wherein the electrolyte salt includes at least one kind of first lithium salt selected from a group consisting of LiPF₆, LiBF₄, LiN(SO₂F)₂, LiN(SO₂CF₃)₂, and LiN(SO₂C₂F₅)₂, at least two kinds of second lithium salts selected from a group consisting of a lithium salt having an oxalic acid structure, a lithium salt having a phosphoric acid structure, and a lithium salt including a S=O group, and at least one kind of tertiary carboxylic acid ester represented by the following general formula (I) is contained, and an energy storage device containing the same. 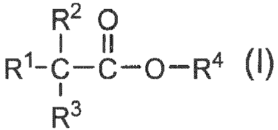 (In the formula, each of R¹ to R³ independently represents a methyl group or ethyl group, and R⁴ represents a C₁ to C₆ alkyl group in which at least one hydrogen atom is substituted or not substituted by a halogen atom.)

## Description

### Technical Field

The present invention relates to a nonaqueous electrolytic solution that can improve electrochemical properties at high temperatures and an energy storage device using the same.

### Background Art

In recent years, an energy storage device, particularly a lithium secondary battery is widely used as a power source of electronic equipment such as a cellular phone and a laptop computer or a power source for an electric vehicle and power storage. The battery installed in such electronic equipment and vehicle is used at high temperature in midsummer or a warm environment warmed with heat generated by the electronic equipment in most cases. More, although for thin electronic equipment such as a tablet and Ultrabook, a laminate-type battery where a laminate film such as an aluminum laminate film is used for an exterior member or a square-shaped battery is generally used, such batteries accompany a problem that the batteries may easily deform even with slight expansion of the exterior member due to their thin shapes, that an influence on the electronic equipment due to such deformation is a great concern.

A lithium secondary battery mainly consists of a positive electrode and a negative electrode which contain materials capable of absorbing and releasing lithium, and a nonaqueous electrolytic solution including a lithium salt and a nonaqueous solvent, and as the nonaqueous solvent, carbonates such as ethylene carbonate (EC) and propylene carbonate (PC) are used.

Further, as the negative electrode of a lithium secondary battery, lithium metal, a metal compound capable of absorbing and releasing lithium (metal element, oxide, alloy with lithium, etc.) and a carbon material are known. Particularly, a nonaqueous electrolytic solution secondary battery produced by using a carbon material, such as coke, graphite (artificial graphite or natural graphite) and the like which can absorb and release lithium is widely put into practical use. Since the above negative electrode material absorbs and releases lithium and electrons at extremely low potential equivalent to that of lithium metal, there is a possibility that more solvent may be reductively decomposed particularly at high temperature. For this reason, despite the types of negative electrode material, a part of the solvent in the electrolytic solution is reductively decomposed on the negative electrode, and accordingly, deposit of decomposed products, generation of gases, and swelling of the battery occur, and consequently, migration of lithium ions is disturbed. Accordingly, there are problems like deterioration of battery properties such as cycle characteristics particularly at high temperature and deformation of a battery due to swelling of the electrode. Further, although a lithium secondary battery where lithium metal and alloy with lithium metal, metal element such as tin, silicon or the like, or oxide is used as the negative electrode material has high initial capacity. However, because of proceeding a pulverization of the negative electrode material during a cycle, a reductive decomposition of the nonaqueous solvent occurs with increasing speed compared to the negative electrode of the carbon material, and particularly at high temperature, it is known that problems such as great deterioration of battery performance like battery capacity and cycle characteristics, etc., and deformation of the battery due to swelling of the electrode tend to occur more easily.

On the other hand, since materials used as a positive electrode material that can absorb and release lithium such as LiCoO₂, LiMn₂O₄, LiNiO₂, and LiFePO₄ stores and releases lithium and electrons at high potential of 3.5V or more on lithium basis, there is a possibility that more solvents is oxidized and decomposed particularly at high temperature. For this reason, a part of the solvent in the electrolytic solution is oxidized and decomposed on the positive electrode despite the type of positive electrode material and subsequently, migration of lithium ions is interfered by deposition of decomposed products and generation of gases or the like. As a result, there is a problem of deterioration of battery performance such as cycle characteristics.

In spite of the conditions above, functions of electronic equipment to which a lithium secondary battery is installed are diversified even further and there is a trend of increase in electric power consumption. For this reason, increase of a lithium secondary battery capacity proceeds even further, and due to increase of battery density, reduction of useless-space volume inside the battery, etc., the volume that the nonaqueous electrolytic solution occupies inside the battery is being reduced. Accordingly, the battery performance at high temperature tends to deteriorate with few decomposition.

Patent Document 1 discloses an electrolytic solution containing carboxylic acid ester such as ethyl propionate and lithium salt such as lithium bis[oxalato-O,O'] borate and describes that decrease of discharge capacity can be improved by suppressing swelling of the battery.

Patent Document 2 discloses an electrolytic solution containing a cyclic carbonate, chain carbonate, fluoroarene, and carboxylic acid esters and describes that safety at the time of overcharge can be improved while suppressing generation of gases and keeping discharge properties at low temperature.

### Related Document

### Patent Document

Patent Document 1: Japanese Patent Publication No. 2008-135273 A
Patent Document 2: International Publication No. 2013/153814

### Summary of Invention

### Problems to be solved by Invention

The conventional electrode of a battery to be mounted on a vehicle, in order to increase input and output performance, usually an electrode was applied thinly at low density in general. However, in order to raise energy density, electrode density and thickness of the electrode need to be increased even further. On the other hand, a battery utilizing such electrode has a problem in that its battery performance after storage at high temperature deteriorates significantly.

An object of the present invention is to provide a nonaqueous electrolytic solution capable of improving electrochemical properties at high temperature even for a high density electrode, and further improving capacity retention rate after storage at high temperature and dramatically suppressing increase in impedance after high temperature storage, and an energy storage device using the same.

### Means for solving problems

The present inventors specifically investigated the performance of the nonaqueous electrolytic solution of the related art. As a result, the present inventors found that with the nonaqueous electrolytic solution of Patent Document 1 and Patent Document 2, improvement in storage properties at high temperature is insufficient when increasing capacity even further in the future, and above all, nothing is disclosed regarding a concern to suppress increase of impedance after high temperature storage.

In this regard, the present inventors have repeated the researches earnestly to solve the problem, and found that by including at least two kinds of specific lithium salts in addition to a main electrolyte and also by adding a specific tertiary carboxylic acid ester to the nonaqueous electrolytic solution, capacity retention rate after storage at high temperature can be improved and also increase of impedance after high temperature storage can be suppressed, and thus completed the present invention.

That is, the present invention provides (1) and (2) described below.

(1) A nonaqueous electrolytic solution where an electrolyte salt is dissolved to a nonaqueous solvent, wherein the electrolyte salt contains at least one kind of a first lithium salt selected from a group consisting of LiPF₆, LiBF₄, LiN(SO₂F)₂, LiN(SO₂CF₃)₂, and LiN(SO₂C₂F₅)₂, and at least two kinds of second lithium salts selected from a group consisting of a lithium salt having an oxalic acid structure, a lithium salt having a phosphoric acid structure, and a lithium salt including a S=O group, and at least one kind of tertiary carboxylic acid ester represented by the following general formula (I) is contained. 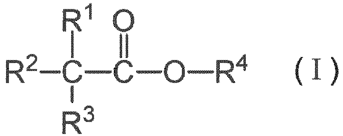 (In the formula, each of R¹ to R³ independently represents a methyl group or ethyl group, and R⁴ represents a C₁ to C₆ alkyl group in which at least one hydrogen atom is substituted or not substituted by a halogen atom.)
(2) An energy storage device provided with a positive electrode, a negative electrode, and a nonaqueous electrolytic solution prepared by dissolving electrolyte salt to a nonaqueous solvent, wherein the electrolyte salt includes at least one kind of a first lithium salt selected from a group consisting of LiPF₆, LiBF₄, LiN(SO₂F)₂, LiN(SO₂CF₃)₂, and LiN(SO₂C₂F₅)₂, and at least two kinds of second lithium salts selected from a group consisting of a lithium salt having an oxalic acid structure, a lithium salt having a phosphoric acid structure, and a lithium salt including a S=O group, and further, at least one kind of tertiary carboxylic acid ester represented by the following general formula (I) is contained in the nonaqueous electrolytic solution. 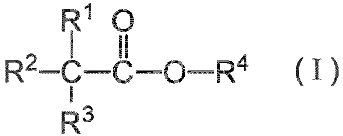 (In the formula, each of R¹ to R³ independently represents a methyl group or ethyl group, and R⁴ represents a C₁ to C₆ alkyl group in which at least one hydrogen atom is substituted or not substituted by a halogen atom.)

### Effect of Invention

According to the present invention, a nonaqueous electrolytic solution capable of improving a capacity retention rate after high temperature storage and suppressing increase of impedance after high temperature storage, and an energy storage device using the same such as a lithium battery can be provided.

### Modes for Carrying out the Invention

The present invention relates to a nonaqueous electrolytic solution and an energy storage device using the same.

### [Nonaqueous electrolytic solution]

A nonaqueous electrolytic solution of the present invention is a nonaqueous electrolytic solution in which an electrolyte is dissolved to a nonaqueous solvent, wherein the electrolyte salt includes at least one kind of a first lithium salt selected from a group consisting of LiPF₆, LiBF₄, LiN(SO₂F)₂, LiN(SO₂CF₃)₂, and LiN(SO₂C₂F₅)₂, and at least two kinds of second lithium salts selected from a group consisting of a lithium salt having a oxalic acid structure, a lithium salt having a phosphoric acid structure, and a lithium salt including a S=O group, and also, at least one kind of tertiary carboxylic acid ester represented by the general formula (I) is contained in the nonaqueous electrolytic solution.

Reasons for why the nonaqueous electrolytic solution of the present invention can improve capacity retention rate after high temperature storage and suppress increase of impedance after high temperature storage are not necessarily clear, however, the following may be considered.

In the present invention, since the first lithium salt such as LiPF₆ used as a main electrolyte is decomposed on a negative electrode at high temperature, when only such first lithium salt is used, impedance increases along with a decrease in the concentration of the main electrolyte and a deposition of decomposed products. In contrast, by using at least two kinds of the second lithium salts selected from a group consisting of a lithium salt having an oxalic acid structure, a lithium salt having a phosphoric acid structure, and a lithium salt including a S=O group together with the first lithium salt, a strong composite coating film having good lithium permeability can be formed on the negative electrode that thermostability of the main electrolyte can be improved while suppressing decomposition of the main electrolyte such as LiPF₆. Further, by including a specific tertiary carboxylic acid ester in the electrolytic solution, electrolytic solution easily infiltrate inside an electrode sheet that the effect by the second lithium salts can be applied throughout the electrode sheet. Accordingly, it was found that increase of impedance after high temperature storage can also be dramatically suppressed while improving a capacity retention rate after high temperature storage.

The first lithium salt contained in the nonaqueous electrolytic solution of the present invention is preferably one kind or two kinds selected from a group consisting of LiPF₆, LiBF₄, LiN(SO₂F)₂[LiFSI], LiN(SO₂CF₃)₂[LiTFSI], and LiN(SO₂C₂F₅)₂, and most preferably LiPF₆ is used. Generally, the concentration of the first lithium salt is preferably 0.3 M or more, more preferably 0.7 M or more, and further preferably 1.1 M or more. Further, the upper limit thereof is preferably 2.5 M or less, more preferably 2.0 M or less, and further preferably 1.6 M or less.

Further, a suitable combination of these lithium salts is when LiPF₆ and at least one kind of lithium salt selected from a group consisting of LiBF₄, LiFSI, and LiTFSli are included to in nonaqueous electrolytic solution. The ratio of lithium salts other than LiPF₆ in the nonaqueous solvent is preferably 0.001 M or more since the effect of improving the electrochemical properties at high temperature can be easily exerted. Also, a ratio of 1.0 M or less is preferable as a concern for a decrease in the effect of improving the electrochemical properties at high temperature can becomes small. The ratio thereof is preferably 0.01 M or more, particularly preferably 0.03 M or more, and most preferably 0.04 M or more. The upper limit thereof is preferably 0.8 M or less and particularly preferably 0.5 M or less.

When at least two kinds of lithium salts selected from a group consisting of lithium salt having an oxalic acid structure and lithium salt including a S=O group, or at least two kinds of lithium salts selected from a group consisting of lithium salt having an oxalic acid structure and lithium salt having a phosphoric acid structure, or at least two kinds of lithium salts selected from a group consisting of lithium salt having a phosphoric acid structure and lithium salt including a S=O group, are included as the second lithium salts in the nonaqueous electrolytic solution, it is preferable since the capacity retention rate after high temperature storage can be further improved and increase in impedance after high temperature storage can be suppressed. Also, it is further preferable to include at least two kinds of lithium salts selected from a group consisting of lithium salt having an oxalic acid structure and lithium salt having a phosphoric acid structure, or at least two kinds of lithium salts selected from a group consisting of lithium salt having a phosphoric acid structure and lithium salt including a S=O group.

Furthermore, it is particularly preferable when the nonaqueous electrolytic solution includes one or more kinds of the lithium salts having an oxalic acid structure, one or more kinds selected from a group consisting of lithium salts having a phosphoric acid structure, and one or more kinds of lithium salts selected from a group consisting of lithium salts including a S=O group.

As for the case where the second lithium salts include at least two kinds selected from a group consisting of lithium salt having an oxalic acid structure and lithium salt having a phosphoric acid structure, or at least two kinds selected from a group consisting of lithium salt having a phosphoric acid structure and lithium salt including a S=O group, it is preferably when a content ratio (mass ratio) between the lithium salt having a phosphoric acid structure and the lithium salt having an oxalic acid structure (or lithium salt including a S=O group) is "lithium salt having a phosphoric acid structure":"lithium salt having an oxalic acid structure" (or "lithium salt having a phosphoric acid structure": "lithium salt including a S=O group") =99:1 to 51:49, since increase of impedance after high temperature storage can be suppressed.

As a lithium salt having an oxalic acid structure contained in the nonaqueous electrolytic solution of the present invention, lithium bis(oxalato)borate (LiBOB), lithium difluoro(oxalato)borate (LiDFOB), lithium tetrafluoro(oxalato)phosphate (LiTFOP), and lithium difluoro bis(oxalato)phosphate (LiDFOP) may be suitably mentioned. Among the above, LiBOB, LiDFOB, or LiDFOP is preferable.

When the lithium salts contained in the nonaqueous electrolytic solution of the present invention include two or more kinds of lithium salts having an oxalic acid structure, it is preferable the both a lithium salt having two oxalic acid structures and a lithium salt having one oxalic acid structure are included and it is more preferable the lithium salts having two oxalic acid structures is contained more than the lithium salt having one oxalic acid structure.

As for the lithium salt having a phosphoric acid structure contained in the nonaqueous electrolytic solution of the present invention, lithium difluorophosphate (LiPO₂F₂) or lithium fluorophosphate (Li₂PO₃F) may be suitably mentioned. As for the lithium salt including a S=O group, lithium methyl sulfate (LMS), lithium ethyl sulfate (LES), lithium 2,2,2-trifluoro ethyl sulfate (LFES), lithium trifluoro((methanesulfonyl)oxy)borate (LiTFMSB), lithium pentafluoro((methanesulfonyl)oxy)phosphate (LiPFMSP), or lithium fluorosulfonate (FSP3Li) may be suitably mentioned. Among the above, LiPO₂F₂, LMS, LES, FSO₃Li, or LiTFMSB is preferable and LMS or LES is more preferable.

It is preferable when the lithium salt including a S=O group contained in the nonaqueous electrolytic solution of the present invention is the lithium salt including a SO₄ group, since it can further improve capacity retention rate after high temperature storage and suppress increase of impedance after high temperature storage. It is more preferable when one or more kinds of lithium salts including a SO₄ group are contained.

In the nonaqueous electrolytic solution of the present invention, the content of the lithium salt having an oxalic acid structure in the nonaqueous electrolytic solution is preferably 0.001 to 0.2M. When the content is 0.2M or less, a coating film is excessively formed on an electrode and a possibility of increasing impedance after high temperature storage is small. When the content is 0.001 M or more, an effect of raising stability of the first lithium salt is sufficient and improvement effect in capacity retention rate after high temperature storage increases. The content in the nonaqueous electrolytic solution is preferably 0.005 M or more and more preferably 0.01M or more. The upper limit thereof is preferably 0.15 M or less and more preferably 0.12 M or less.

The content of the lithium salt having a phosphoric acid structure and the content of the lithium salt including a S=O group in the nonaqueous electrolytic solution of the present invention are preferably 0.001 to 0.3M. When the content is 0.3 M or less, a coating film is excessively formed on an electrode and a possibility of increasing impedance after high temperature storage is small. When the content is 0.001 M or more, an effect of raising stability of the first lithium salt is sufficient and improvement effect in capacity retention rate after high temperature storage increases. The content in the nonaqueous electrolytic solution is preferably 0.01 M or more and more preferably 0.03M or more. The upper limit thereof is preferably 0.25 M or less and more preferably 0.2 M or less. The above content is not the total content of the lithium salt having a phosphoric acid structure and the lithium salt including a S=O group but is the content of each lithium salt.

When a total mol concentration of the second lithium salts is less than mol concentration of the first lithium salt, a film is not formed excessively on the electrode, and thus it is preferable as stability of the first lithium salt can be improved without increasing the impedance after storage under high. A total mol concentration of the second lithium salts is preferably 0.001 M or more and 0.4 M or less with respect to the nonaqueous solvent constituting the nonaqueous electrolytic solution. When the content is 0.4 M or less, a coating film is excessively formed on an electrode and a possibility of increasing impedance after high temperature storage is small. When the content is 0.001 M or more, an effect of raising stability of the first lithium salt is sufficient and improvement effect in capacity retention rate after high temperature storage increases. The content in the nonaqueous electrolytic solution is preferably 0.01 M or more and more preferably 0.03M or more. The upper limit thereof is preferably 0.35 M or less and more preferably 0.3 M or less.

Tertiary carboxylic acid ester contained in the nonaqueous electrolytic solution of the present invention can be represented by the following general formula (I). 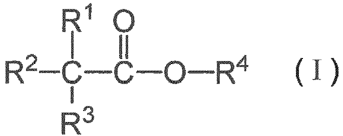 (In the formula, each of R¹ to R³ independently represents a methyl group or ethyl group, and R⁴ represents a C₁ to C₆ alkyl group in which at least one hydrogen atom is substituted or not substituted by a halogen atom.)

In the general formula (I), R¹ to R³ represent a methyl group or ethyl group and preferably a methyl group. R⁴ represents a C₁ to C₆ alkyl group in which at least one hydrogen atom is substituted or not substituted by a halogen atom and is preferably a C₁ to C₄ alkyl group in which at least one hydrogen atom is substituted or not substituted by a halogen atom, and more preferably a C₁ to C₄ alkyl group in which a hydrogen atom is not substituted by a halogen atom.

As specific examples of R⁴, linear alkyl groups such as a methyl group, ethyl group, n-propyl group, n-butyl group, n-pentyl group, and n-hexyl group, branched-chain alkyl groups such as an iso-propyl group, sec-butyl group, 2-pentyl group, 3-pentyl group, tert-butyl group, and tert-amyl group, or halogenated alkyl groups such as a fluoromethyl group, difluoromethyl group, trifluoromethyl group, 2-chloroethyl group, 2-fluoroethyl group, 2,2-difluoroethyl group, 2,2,2-trifluoroethyl group, 3-fluoropropyl group, 3-chloropropyl group, 3,3-difluoropropyl group, 3,3,3-trifluoropropyl group, 2,2,3,3-tetrafluoro propyl group, and 2,2,3,3,3-pentafluoropropyl group may be suitably mentioned. Among the above, the methyl group, ethyl group, n-propyl group, n-butyl group, iso-propyl group, 2,2-difluoroethyl group, 2,2,2-trifluoroethyl group, and 2,2,3,3-tetrafluoro n-propyl are preferable, and the methyl group, ethyl group, n-propyl group, n-butyl group, and iso-propyl group are more preferable.

As specific examples of tertiary carboxylic acid ester represented by the general formula (I), methyl pivalate (MPiv), methyl 2,2-dimethylbutyrate, methyl 2-methylbutyrate, methyl 2,2-diethylbutyrate, ethyl pivalate, n-propyl pivalate, n-butyl pivalate, n-heptyl pivalate, n-hexyl pivalate, iso-propyl pivalate (IPPiv), iso-butyl pivalate, sec-butyl pivalate, tert-butyl pivalate, 2,2-difluoroethyl pivalate, 2,2,2-trifluoroethyl pivalate (TFEPiv), and 2,2,3,3-tetrafluoro n-propyl pivalate or the like may be suitably mentioned. Among the above, methyl pivalate, ethyl pivalate, n-propyl pivalate, n-butyl pivalate, iso-propyl pivalate, 2,2-difluoroethyl pivalate, 2,2,2-trifluoroethyl pivalate, and 2,2,3,3-tetrafluoro n-propyl pivalate are preferable, and methyl pivalate, ethyl pivalate, n-propyl pivalate, n-butyl pivalate, and iso-propyl pivalate are more preferable.

In the nonaqueous electrolytic solution of the present invention, the content of tertiary carboxylic acid ester represented by the general formula (I) in the nonaqueous solvent is preferably 0.5 to 40% by volume. When the content is 40% by volume or less, a possibitily of reducing capacity retention rate after high temperature storage is small. When the content is 0.5% by volume or more, improvement of permeability of the electrolytic solution with respect to an electrode sheet is sufficient and increase in impedance after high temperature storage can be suppressed. The content is preferably 1% by volume or more in the nonaqueous solvent, and more preferably 2% by volume or more. More, the upper limit thereof is preferably 37% by volume or less and more preferably 35% by volume or less.

In the nonaqueous electrolytic solution of the present invention, a ratio between a sum total mol concentration of at least two kinds of the second salts selected from a group consisting of lithium salt having an oxalic acid structure, lithium salt having a phosphoric acid structure, and lithium salts including a S=O group, and mol concentration of tertiary carboxylic acid ester represented by the general formula (I) is preferably "second lithium salts":"tertiary carboxylic acid ester" =1:99 to 49:51 and more preferably 5:95 to 45:55. When the above range is used, the effect of coating film formation by the second lithium salts and improvement in permeability of the electrolytic solution to the electrode sheet in combination suppress increase of impedance after high temperature storage even further.

When the nonaqueous solvent contains a benzene compound substituted by fluorine represented by the following general formula (II), permeability of the electrolytic solution with respect to the electrode sheet increases even further and increase of impedance after high temperature storage is further suppressed. 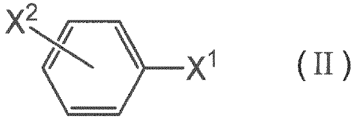 (In the formula,, X¹ represents a fluorine atom and X² represents a hydrogen atom or a fluorine atom.)

As the general formula (II), fluorobenzene (FB), 1,2-fluorobenzene, 1,3-fluorobenzene, and 1,4-fluorobenzene may be suitably mentioned. Among the above, fluorobenzene and 1,4-fluorobenzene are preferable and fluorobenzene (FB) is particularly preferable.

In the nonaqueous electrolytic solution of the present invention, the content of a benzene compound substituted by fluorine represented by the above general formula (II) in the nonaqueous solvent is preferably 0.1 to 20% by volume. When the content is 20% by volume or less, a possibility of reducing the capacity retention rate after high temperature storage is small. When the content is 0.1% by volume or more, improvement of permeability of the electrolytic solution to the electrode sheet becomes sufficient and increase of impedance after high temperature storage can be suppressed. The content is preferably 0.5% by volume or more in the nonaqueous electrolytic solution, and more preferably 1% by volume or more. Also, the upper limit thereof is preferably 17% by volume or less and more preferably 15% by volume or less.

The lower limit for the concentration of HF contained in the nonaqueous electrolytic solution is preferably 1 ppm or more and more preferably 2 ppm or more. A HF concentration of more than the lower limit value is preferable since a capacity retention rate after high temperature storage and output characteristics at low temperatures after high temperature storage can be improved and input characteristics at low temperature after high temperature storage can be improved. Further, the upper limit of the HF concentration is preferably 50 ppm or less and more preferably 20 ppm or less, and furthermore preferably 8 ppm or less as capacity retention rate after high temperature storage can be further enhanced and increase of impedance after high temperature storage can be suppressed.

Among the second lithium salts, a ratio between the sum total of the concentration of lithium salt containing fluorine and HF concentration (HF concentration / sum total of second lithium salts) is preferably 1/10000 to 1/20 in mass ratio. The upper limit of the ratio is preferably 1/220 or less and more preferably 1/500 or less.

### [Nonaqueous Solvent]

As the nonaqueous solvent used in the nonaqueous electrolytic solution of the present invention, any nonaqueous solvent can be used as long as it contains tertiary carboxylic acid ester represented by general formula (I). However, one, two, or more kinds selected from a group consisting of a cyclic carbonate, chain ester (excluding those that correspond to tertiary carboxylic acid ester represented by the general formula (I), and hereinafter the same), lactone, ether, and amide can be mentioned. From the viewpoint of synergistically improving the electrochemical properties at high temperature, preferably chain ester is contained and furthermore preferably both of cyclic carbonate and chain esters are contained.

Incidentally, the term "chain ester" is used as a concept including chain carbonate and chain carboxylic acid ester.

As the cyclic carbonate, one or two or more kinds selected from ethylene carbonate (EC), propylene carbonate (PC), 1,2-butylene carbonate, 2,3-butylene carbonate, 4-fluoro-1,3-dioxolane-2-one (FEC), trans- or cis-4,5-difluoro-1,3-dioxolane-2-one (hereinafter, both of them are collectively referred to as "DFEC"), vinylene carbonate (VC), vinyl ethylene carbonate (VEC), 2- propynyl-2-oxo-1,3-dioxolane -4-carboxylate (PEC), and 4-ethynyl-1,3-dioxolane-2-one (EEC) can be mentioned. One or more kinds selected from ethylene carbonate, propylene carbonate, 4-fluoro-1,3-dioxolane-2-one, vinylene carbonate, vinyl ethylene carbonate, 2-propynyl-2-oxo-1,3-dioxolane-4-carboxylate, and 4-ethynyl-1,3-dioxolane-2-one are preferable and two or more kinds are more preferable.

Further, it is preferable to use at least one kind of cyclic carbonate selected from cyclic carbonates having unsaturated bond such as carbon-carbon double bond or carbon-carbon triple bond or the like and cyclic carbonate having a fluorine atom since electrochemical properties at high temperature can be further improved. It is more preferable to contain both of cyclic carbonate including an unsaturated bond such as carbon-carbon double bond or carbon-carbon triple bond and a cyclic carbonate having a fluorine atom. As for the cyclic carbonate having unsaturated bond such as carbon-carbon double bond or carbon-carbon triple bond or the like, VC, VEC, PEC, or EEC is furthermore preferable, and as for the cyclic carbonate including a fluorine atom, FEC or DFEC is further preferable.

The content of the cyclic carbonate including unsaturated bond such as carbon-carbon double bond or carbon-carbon triple bond is preferably 0.07% by volume or more with respect to the total volume of the nonaqueous solvent, and more preferably 0.2% by volume or more, and further preferably 0.7% by volume or more. Also, the upper limit thereof is preferably 7% by volume or less, more preferably 4% by volume or less, and further preferably 2.5% by volume or less since stability of the coating film at high temperature can be increased even more without impairing Li ion permeability.

The content of the cyclic carbonate including a fluorine atom is preferably 0.07% by volume or more with respect to the total volume of the nonaqueous solvent, and more preferably 4% by volume or more, and further preferably 7% by volume or more. Also, the upper limit thereof is preferably 35% by volume or less, more preferably 25% by volume or less, and further preferably 15% by volume or less. Such limits are preferable since stability of the coating film at high temperature can be increased even more without impairing Li ion permeability.

When the nonaqueous solvent contains both the cyclic carbonate including unsaturated bond such as carbon-carbon double bond or carbon-carbon triple bond and the cyclic carbonate including a fluorine atom, the content of the cyclic carbonate including unsaturated bond such as carbon-carbon double bond or carbon-carbon triple bond with respect to a total content of the cyclic carbonate including a fluorine atom and a cyclic carbonate including unsaturated bond such as carbon-carbon double bond or carbon-carbon triple bond is preferably 0.2% by volume or more, more preferably 3% by volume or more, and more preferably 7% by volume or more. The upper limit thereof is preferably 50% by volume or less, more preferably 40% by volume or less, and further preferably 30% by volume or less. Such limits are particularly preferable since stability of the coating film at high temperatures can be increased even more without impairing Li ion permeability.

Also, it is preferable when the nonaqueous solvent contains both ethylene carbonate and cyclic carbonate including unsaturated bond such as carbon-carbon double bond or carbon-carbon triple bond since stability of the coating film formed on the electrode increases. The content of ethylene carbonate and cyclic carbonate including unsaturated bond such as carbon-carbon double bond or carbon-carbon triple bond is preferably 3% by volume or more, more preferably 5% by volume or more, and further preferably 7% by volume or more with respect to the total volume of the nonaqueous solvent. More, the upper limit thereof is preferably 45% by volume or less, more preferably 35% by volume or less, and furthermore preferably 25% by volume or less.

These solvents can be used by one type, but using two or more types in combination is preferable as electrochemical properties at high temperature further improve, and using three types or more in combination is particularly preferable. As for suitable combinations of such cyclic carbonates, EC and PC, EC and VC, PC and VC, VC and FEC, EC and PEC, EC and FEC, PC and FEC, FEC, and DFEC, EC and DFEC, PC and DFEC, VC and DFEC, VEC and DFEC, VC and EEC, EC and EEC, EC, PC, and VC, EC, PC, and PEC, EC, PC, and FEC, EC, VC, and FEC, EC, VC, and VEC, EC, VC, and PEC, EC, VC, and EEC, EC, EEC, and FEC, PC, VC, and FEC, EC, VC, and DFEC, PC, VC, and DFEC, EC, PC, VC, and FEC, EC, PC, VC, and PEC, EC, PC, VC, and DFEC, etc., are preferable. Among the above combinations, EC and VC, EC and FEC, PC and FEC, EC, PC, and VC, EC, PC, and FEC, EC, VC, and PEC, EC, VC, and FEC, EC, VC, and EEC, EC, EEC, and FEC, PC, VC, and FEC, EC, PC, VC, and FEC, and the like are more preferable.

As the chain ester, one or more kinds of asymmetrically chain carbonates selected from a group consisting of methyl ethyl carbonate (MEC), methyl propyl carbonate (MPC), methyl isopropyl carbonate (MIPC), methyl butyl carbonate, and ethyl propyl carbonate, one or more kinds of symmetrical chain carbonates selected from a group consisting of dimethyl carbonate (DMC), diethyl carbonate (DEC), dipropyl carbonate, and dibutyl carbonate, and one or more kinds of chain carboxylic acid esters selected from a group consisting of methyl propionate (MP), ethyl propionate (EP), propyl propionate (PP), butyl propionate, methyl acetate (MA), ethyl acetate (EA), propyl acetate (PA), and butyl acetate may be suitably mentioned.

Among the chain esters, chain carbonate selected from a group consisting of dimethyl carbonate, methyl ethyl carbonate, methyl propyl carbonate, methyl isopropyl carbonate, and methyl butyl carbonate, or chain carboxylic acid ester selected form a group consisting of methyl propionate (MP), ethyl propionate (EP), and propyl propionate (PP) are preferable, and particularly preferable when chain carboxylic acid ester is contained.

When using chain carboxylic acid ester, the one with kinetic viscosity of 0.75 cSt or less at 25°C is preferable, and methyl propionate (MP), ethyl propionate (EP), propyl propionate (PP), methyl acetate (MA), ethyl acetate (EA), and propyl acetate (PA) are more preferable, and methyl propionate (MP), ethyl propionate (EP), and propyl propionate (PP) are further preferable.

Further, when the chain carbonate is used, two or more kinds thereof are preferably used. Moreover, it is more preferable to contain both of symmetrically chain carbonate and asymmetrically chain carbonate, and it is further preferable when the content of the symmetrically chain carbonate is more than that of the asymmetrically chain carbonate.

The content of the chain ester is not particularly limited, but the content thereof is preferably in a range of 60 to 90% by volume with respect to the total volume of the nonaqueous solvent. When the content thereof is 60% by volume or more, the viscosity of the nonaqueous electrolytic solution does not become too high. When the content thereof is 90% by volume or less, a possibility of deteriorating electrochemical properties at high temperature due to a decrease in the electrical conductivity of the nonaqueous electrolytic solution is small. Thus, the above-mentioned range is preferable.

The ratio of the volume occupied by symmetrically chain carbonates in chain carbonate is preferably 51 % by volume or more and more preferably 55% by volume or more. The upper limit thereof is more preferably 95% by volume or less and further preferably 85% by volume or less. It is particularly preferable to include dimethyl carbonate in the symmetrically chain carbonate. Further, the asymmetrically chain carbonate more preferably contains a methyl group and particularly preferably contains methyl ethyl carbonate. The above-mentioned conditions are preferable as the electrochemical properties at high temperature are further improved.

The ratio of the cyclic carbonate to the chain ester, that is, "cyclic carbonate": "chain ester" (volume ratio), is preferably 10:90 to 45:55, more preferably 15:85 to 40:60, and particularly preferably 20:80 to 35:65, from the viewpoint of improving the electrochemical properties at high temperature.

As other nonaqueous solvents, one or two or more kinds selected from a group consisting of cyclic ether such as tetrahydrofuran, 2-methyl tetrahydrofuran, and 1,4-dioxane, chain ethers such as 1,2-dimethoxyethane, 1,2-diethoxyethane, and 1,2-dibutoxyethane, amides such as dimethyl formamide, a sulfone such as sulfolane, and lactones such as γ-butyrolactone, γ-valerolactone, and α-angelica lactone can be suitably mentioned.

The nonaqueous solvent is usually used in a mixture in order to accomplish appropriate physical properties. As for their combinations, for example, a combination of cyclic carbonate and chain carbonate, a combination of cyclic carbonate and chain carboxylic acid ester, a combination of cyclic carbonate, chain carbonate, and lactone, a combination of cyclic carbonate, chain carbonate, and ether, or a combination of cyclic carbonate, chain carbonate, and chain carboxylic acid ester, etc. can be suitably mentioned.

For the purpose of further enhancing stability of the coating film at high temperature, preferably other additives are further added into the nonaqueous electrolytic solution. Specific examples of other additives are the following compounds (A) to (I) below.

(A) One or more kinds of nitrile compounds selected from a group consisting of acetonitrile, propionitrile, succinonitrile, glutaronitrile, adiponitrile, pimelonitrile, suberonitrile, and sebaconitrile.
(B) An aromatic compound having a branched alkyl group such as cyclohexyl benzene, fluorocyclohexyl benzene compound (1-fluoro-2-cyclohexyl benzene, 1-fluoro-3-cyclohexyl benzene, 1-fluoro-4-cyclohexyl benzene), tert-butyl benzene, tert-amyl benzene, and 1-fluoro4-tert-butyl benzene, or aromatic compound such as biphenyl, terphenyl (o-, m-, or p-terphenyl), diphenyl ether, anisole, 2,4-difluoro anisole, and partial hydride of terphenyl (1,2-dicyclohexyl benzene, 2-phenylbicyclohexyl, 1,2-diphenyl cyclohexane, o-cyclohexyl biphenyl).
(C) One or more kinds of isocyanate compounds selected from a group consisting of methyl isocyanate, ethyl isocyanate, butyl isocyanate, phenyl isocyanate, tetramethylenedi isocyanate, hexamethylenedi isocyanate, octamethylenedi isocyanate, 1,4-phenylenedi isocyanate, 2-isocyanato ethyl acrylate, and 2-isocyanato ethyl methacrylate.
(D) One or more kinds of compounds containing a triple bond selected from a group consisting of 2-propynyl methyl carbonate, 2-propynyl acetate, 2-propynyl formate, 2-propynyl methacrylate, 2-propynyl methanesulfonate, 2-propynyl vinylsulfonate (VSP), 2-propynyl 2-(methanesulfonyloxy)propionate, di(2-propynyl) oxalate, methyl 2-propynyloxalate, ethyl 2-propynyloxalate, di(2-propynyl) glutarate, 2-butyne-1,4-diyl dimethanesulfonate, 2-butyne-1,4-diyl diformate, and 2,4-hexadiyne-1,6-diyl dimethanesulfonate.
(E) One or more kinds of cyclic or chain compounds including a S=O group selected from a group consisting of sultone such as 1,3-propane sultone (PS), 1,3-butanesultone, 2,4-butanesultone, 1,4-butanesultone, 1,3-propenesultone, 2,2-dioxide-1,2-oxathiolane-4-yl acetate, an 5,5-dimethyl-1,2-oxathiolane-4-one 2,2-dioxide, cyclic sulfite such as ethylene-sulfite, hexahydrobenzo[1,3,2]dioxathiolane2-oxide (also called as 1,2-cyclohexanediol cyclic sulfite), and 5-vinyl hexahydro-1,3,2-benzodioxathiole-2-oxide, cyclic sulfate such as ethylene sulfate, [4,4'-bi(1,3,2-dioxathiolane)]2,2',2'-tetraoxide, (2,2-dioxide-1,3,2-dioxathiolane-4-yl)methyl methanesulfonate, and 4-((methylsulfonyl)methyl)-1,3,2-dioxathiolane 2,2-dioxide, sulfonic acid esters such as butane-2,3-diyldimethanesulfonate, butane-1,4-diyldimethanesulfonate, and methylenemethanedisulfonate, and vinyl sulfone compounds such as divinyl sulfone, 1,2-bis(vinyl sulfonyl)ethane, or bis(2-vinyl sulfonylethyl)ether.
(F) Cyclic acetal compounds such as 1,3-dioxolane, 1,3-dioxane, and 1,3,5-trioxane, etc.
(G) One or more kinds of phosphorus-containing compounds such as trimethyl phosphate, tributyl phosphate, trioctyl phosphate, tris(2,2,2-trifluoroethyl) phosphate, bis(2,2,2-trifluoroethyl)methyl phosphate, bis(2,2,2-trifluoroethyl)ethyl phosphate, bis(2,2,2-trifluoroethyl)2,2-difluoroethyl phosphate, bis(2,2,2-trifluoroethyl)2,2,3,3-tetrafluoropropyl phosphate, bis(2,2-difluoroethyl)2,2,2-trifluoroethyl phosphate, bis(2,2,3,3-tetrafluoropropyl)2,2,2-trifluoroethyl phosphate, (2,2,2-trifluoroethyl)(2,2,3,3-tetrafluoropropyl)methyl phosphate, tris(1,1,1,3,3,3-hexafluoropropane-2-yl) phosphate, methyl methylenebisphosphate, ethyl methylenebisphosphate, methyl ethylenebisphosphate, ethyl ethylenebisphosphate, methyl butylenebisphosphate, ethyl butylenebisphosphate, methyl 2-(dimethylphosphoryl)acetate, ethyl 2-(dimethylphosphoryl)acetate, methyl 2-(diethylphosphoryl)acetate, ethyl 2-(diethylphosphoryl)acetate, 2-propynyl 2-(dimethylphosphoryl)acetate, 2-propynyl 2-(diethylphosphoryl)acetate, methyl 2-(dimethoxyphosphoryl)acetate, ethyl 2-(dimethoxyphosphoryl)acetate, methyl 2-(diethoxyphosphoryl)acetate, ethyl 2-(diethoxyphosphoryl)acetate, 2-propynyl 2-(dimethoxyphosphoryl)acetate, 2-propynyl 2-(diethoxyphosphoryl)acetate, tetramethyl pyrophosphate, and tetraethyl pyrophosphate.
(H) Cyclic acid anhydrides such as chain carboxylic acid anhydrides such as acetic anhydride, and propionic anhydride, succinic anhydride, maleic anhydride, 3-allyl succinic anhydride, glutaric anhydride, itaconic anhydride, and 3-sulfopropionic anhydride.
(I) Cyclic phosphazene compounds such as methoxypentafluorocyclotriphosphazene, ethoxypentafluorocyclotriphosphazene, phenoxypentafluorocyclotriphosphazene, and ethoxyheptafluorocyclotetraphosphazene.

Among the above, containing at least one or more kinds selected from a group consisting of (A) nitrile compounds, (B) aromatic compounds, and (C) isocyanate compounds is preferable since capacity retention rate after high temperature storage can be enhanced and increase in impedance after high temperature storage can be suppressed.

Among the (A) nitrile compounds, one, two, or more kinds selected from a group consisting of succinonitrile (SN), glutaronitrile, adiponitrile (ADN), and pimelonitril are more preferable.

Among the (B) aromatic compounds, one or more kinds selected from a group consisting of biphenyl, terphenyl (o-, m-, p-terphenyl), cyclohexyl benzene (CHB), tert-butyl benzene (TBB), and tert-amyl benzene (TAB) are preferable, and one or more kinds selected from a group consisting of biphenyl, o-terphenyl, cyclohexyl benzene, and tert-amyl benzene are particularly preferable.

Among the (C) isocyanate compounds, one or more kinds selected from a group consisting of hexamethylene diisocyanate (HMDI), octamethylene diisocyanate, 2-isocyanato ethyl acrylate, and 2-isocyanato ethyl methacrylate are more preferable.

The content of the (A) to (C) compounds in the nonaqueous electrolytic solution is preferably 0.01 to 7% by mass. When the content is within the range, coating film can be formed sufficiently but not excessively thick, and stability of the coating film at high temperature further increases. The content in the nonaqueous electrolytic solution is preferably 0.05% by mass or more and more preferably 0.1% by mass or more. The upper limit thereof is more preferably 5% by mass or less and further preferably 3% by mass or less.

Further, preferably one or more kinds selected from a group consisting of (D) compounds containing a triple bond, (E) compounds containing a cyclic or chain S=O group selected from a group consisting of sultone, cyclic sulfite, sulfonic acid ester, and vinyl sulfone, (F) cyclic acetal compounds, (G) phosphorus-containing compound, (H) cyclic acid anhydrides, and (I) cyclic phosphazene compounds are contained since stability of the coating film at high temperature further improves.

Among the (D) compounds containing a triple bond, one or more kinds selected from a group consisting of 2-propynyl methanesulfonate (MSP), 2-propynyl vinylsulfonate, 2-propynyl 2-(methanesulfonyloxy)propionate, di(2-propynyl) oxalate, and 2-butyne-1,4-diyl dimethanesulfonate are more preferable.

Among the (E) compounds containing a cyclic or chain S=O group selected from a group consisting of sultone, cyclic sulfite, cyclic sulfate, sulfonic acid ester, and vinyl sulfone, one, two, or more kinds selected from a group consisting of 1,3-propane sultone, 1,4-butanesultone, 2,4-butanesultone, 2,2-dioxide-1,2-oxathiolane-4-yl acetate, 5,5-dimethyl-1,2-oxathiolane-4-one 2,2-dioxide, ethylene sulfate, butane-2,3-diyl dimethanesulfonate, pentafluorophenyl methanesulfonate, and divinyl sulfone are more preferable.

Among the (F) cyclic acetal compounds, 1,3-dioxolane or 1,3-dioxane(1,3-DO) is preferable and 1,3-dioxane is more preferable.

Among the (G) phosphorus-containing compounds, tris(2,2,2-trifluoroethyl) phosphate, tris(1,1,1,3,3,3-hexafluoropropane-2-yl) phosphate, methyl 2-(dimethylphosphoryl)acetate, ethyl 2-(dimethylphosphoryl)acetate, methyl 2-(diethylphosphoryl)acetate, ethyl 2-(diethylphosphoryl)acetate, 2-propynyl 2-(dimethylphosphoryl)acetate, 2-propynyl 2-(diethylphosphoryl)acetate, methyl 2-(dimethoxyphosphoryl)acetate, ethyl 2-(dimethoxyphosphoryl)acetate, methyl 2-(diethoxyphosphoryl)acetate, ethyl 2-(diethoxyphosphoryl)acetate, 2-propynyl 2-(dimethoxyphosphoryl)acetate, and 2-propynyl 2-(diethoxyphosphoryl)acetate are preferable, and tris(2,2,2-trifluoroethyl) phosphate, tris(1,1,1,3,3,3-hexafluoropropane-2-yl) phosphate, ethyl 2-(diethylphosphoryl)acetate, 2-propynyl 2-(dimethylphosphoryl)acetate, 2-propynyl 2-(diethylphosphoryl)acetate, ethyl 2-(diethoxyphosphoryl)acetate, 2-propynyl 2-(dimethoxyphosphoryl)acetate, and 2-propynyl 2-(diethoxyphosphoryl)acetate are further preferable.

Among the (H) cyclic acid anhydrides, succinic anhydride, maleic anhydride, and 3-allyl succinic anhydride are preferable, and succinic anhydride and 3-allyl succinic anhydride are further preferable.

Among the (I) cyclic phosphazene compounds, methoxypentafluorocyclotriphosphazene, ethoxy pentafluorocyclotriphosphazene, and phenoxy pentafluorocyclotriphosphazene are preferable, and methoxypentafluorocyclotriphosphazene, and ethoxy pentafluorocyclotriphosphazene are further preferable.

The content of the (D) to (I) compounds in the nonaqueous electrolytic solution is preferably 0.001 to 5% by mass. When the content is within the range, coating film can be formed sufficiently but not excessively thick, and stability of the coating film at high temperature further increases. The content in the nonaqueous electrolytic solution is more preferably 0.01 % by mass or more and further preferably 0.1% by mass or more. The upper limit thereof is more preferably 3% by mass or less and further preferably 2% by mass or less.

### [Manufacturing of Nonaqueous Electrolytic Solution]

The nonaqueous electrolytic solution of the present invention can be obtained by, for example, mixing the nonaqueous solvents and adding thereto the electrolyte salt and the compound represented by the general formula (I).

At this time, for the nonaqueous solvent and the compounds added to the nonaqueous electrolytic solution, the one with minimal impurities purified in advance to an extent where productivity is not significantly lowered should preferably be used.

The nonaqueous electrolytic solution of the present invention can be used for the following first to fourth energy storage devices and as the nonaqueous electrolyte, the one in a gel state can be also used in addition to the one in a liquid state. Also, the nonaqueous electrolytic solution of the present invention can be used for a solid polymer electrolyte. Further, the nonaqueous electrolytic solution of the present invention is preferably used for the first energy storage device using lithium salt for the electrolyte salt (that is, for the lithium battery) or for the fourth energy storage device (that is, for a lithium ion capacitor), more preferably used for the lithium battery, and further preferably used for a lithium secondary battery.

### [First Energy Storage Device (Lithium Battery)]

In the present description, the term "lithium battery" is a general term for a lithium primary battery and lithium secondary battery. Further, in the present description, the term lithium secondary battery is used as a concept also including a so-called lithium ion secondary battery. The lithium battery of the present invention includes a positive electrode, a negative electrode, and a nonaqueous electrolytic solution prepared by dissolving electrolyte salt to the nonaqueous solvent. There are no particular limitation to constituent members other than the nonaqueous electrolytic solution such as the positive electrode and negative electrode.

For example, as positive electrode active material for a lithium secondary battery, a complex metal oxide with lithium containing one or more kinds selected from a group consisting of cobalt, manganese and nickel, are used. These positive electrode active materials can be used singly by one kind or in combination of two or more kinds.

As the lithium complex metal oxide, for example, one or two or more kinds selected from a group consisting of LiCoO₂, LiMn₂O₄, LiNiO₂, LiCo₁₋ₓNiₓO₂(0.01 < x < 1), LiCo_{1/3}Ni_{1/3}Mn_{1/3}O₂, LiNi_{1/2}Mn_{3/2}O₄, and LiCo_{0.98}Mg_{0.02}O₂, etc. may be suitably mentioned. Further, the above may be used in combinations of LiCoO₂ and LiMn₂O₄, LiCoO₂ and LiNiO₂, and LiMn₂O₄ and LiNiO₂, etc.

In addition, a part of the lithium complex metal oxide may be substituted by another element in order to improve the safety at the time of the overcharge and cycle characteristics, and to allow usage at a charge potential of 4.3 V or more. For example, a part of cobalt, manganese or nickel may be substituted by at least one or more kinds of elements such as Sn, Mg, Fe, Ti, Al, Zr, Cr, V, Ga, Zn, Cu, Bi, Mo and La, or a part of O may be substituted by S or F, or the lithium complex metal oxide may be coated with a compound that contains these other elements.

Among the above, lithium complex metal oxides which can be used at a positive electrode charge potential in a full-charge state of 4.3 V or more on Li basis, such as LiCoO₂, LiMn₂O₄ and LiNiO₂, are preferable. Lithium complex metal oxides which can be used at 4.4 V or more such as a solid solution with LiCo₁₋ₓMₓO₂ (wherein, M is one or more kinds of elements selected from a group consisting of Sn, Mg, Fe, Ti, Al, Zr, Cr, V, Ga, Zn and Cu, 0.001 ≤ x ≤ 0.05), LiCo_{1/3}Ni_{1/3}Mn_{1/3}O₂, LiNi_{1/2}Mn_{3/2}O₄, and Li₂MnO₃ and LiMO₂ (M is a transitional metal such as Co, Ni, Mn and Fe) is more preferable. When a lithium complex metal oxide operating at high charge voltage is used, particularly the electrochemical properties used at high temperature easily decline due to the reaction with an electrolytic solution at the time of the charge. However, the lithium secondary battery according to the present invention can suppress the decline of these electrochemical properties.

Particularly, when a positive electrode containing Mn is used, the resistance of a battery tends to easily increase due to elution of Mn ions from the positive electrode, and thus the electrochemical properties used at high temperature tend to decline easily. However, the lithium secondary battery according to the present invention can suppress the decline of these electrochemical properties, and thus is preferable.

Furthermore, as the positive electrode active material, lithium-containing olivine-type phosphoric acid salt may be also used. Particularly, lithium-containing olivine-type phosphoric acid salt containing one or more kinds selected from a group consisting of iron, cobalt, nickel and manganese is preferable. As specific examples thereof, one or more kinds selected from a group consisting of LiFePO₄, LiCoPO₄, LiNiPO₄, and LiMnPO₄ may be mentioned. A part of these lithium-containing olivine-type phosphoric acid salts may be substituted by another element. A part of iron, cobalt, nickel or manganese may be substituted by one or more kinds of elements selected from a group consisting of Co, Mn, Ni, Mg, Al, B, Ti, V, Nb, Cu, Zn, Mo, Ca, Sr, W and Zr, etc. or the lithium-containing olivine-type phosphoric acid salt may be coated with a compound containing these other elements or a carbon material. Among these, LiFePO₄ or LiMnPO₄ is preferable. Further, the lithium-containing olivine-type phosphoric acid salt may be used in a mixture with, for example, the above positive electrode active material.

As for a positive electrode of a lithium primary battery, an oxide of one or more kinds of metal elements such as CuO, Cu₂O, Ag₂O, Ag₂CrO₄, CuS, CuSO₄, TiO₂, TiS₂, SiO₂, SnO, V₂O₅, V₆O₁₂, VOₓ, Nb₂O₅, Bi₂O₃, Bi₂Pb₂O₅, Sb₂O₃, CrO₃, Cr₂O₃, MoO₃, WO₃, SeO₂, MnO₂, Mn₂O₃, Fe₂O₃, FeO, Fe₃O₄, Ni₂O₃, NiO, CoO₃, or CoO, a chalcogen compound, sulfur compounds such as SO₂ and SOCl₂, and fluorocarbon (graphite fluoride) or the like represented by a general formula (CFₓ)ₙ can be suitably mentioned. Among the above, MnO₂, V₂O₅, and graphite fluoride, etc., are preferable.

The pH of the supernatant solution when 10 g of the above-mentioned positive electrode active material is dispersed in 100 ml of distilled water is preferably 10.0 to 12.5 since the effect of improving the electrochemical properties at even higher temperature can be easily obtained, and further preferably 10.5 to 12.0.

Further, the positive electrode preferably contains Ni as an element since impurities such as LiOH in the positive electrode active material tends to increase, and thus the effect of improving the electrochemical properties at even higher temperature can be easily obtained. The atomic concentration of Ni in the positive electrode active material is further preferably 5 to 25 atomic%, and particularly preferably 8 to 21 atomic%.

The conductive material of the positive electrode is not particularly limited as long as it is an electron conductive material that does not cause chemical change. For example, graphites such as natural graphite (flattened graphite etc.) and artificial graphite, one or more kinds of carbon blacks selected from a group consisting of acethylene black, Ketjen black, channel black, furnace black, lamp black and thermal black, etc. may be mentioned. In addition, the graphite and the carbon black may be accordingly mixed and used. The addition amount of the conductive material to the positive electrode mixture is preferably 1% to 10% by mass, and particularly preferably 2% to 5% by mass.

The positive electrode can be manufactured by mixing the above-mentioned positive electrode active material with the conductive material such as acethylene black and carbon black, and a binder such as polytetrafluoroethylene (PTFE), polyvinylidene fluoride (PVDF), a copolymer of styrene and butadiene (SBR), a copolymer of acrylonitrile and butadiene (NBR), carboxymethyl cellulose (CMC), or ethylene-propylene-diene terpolymer, and adding thereto a high boiling-point solvent such as 1-methyl-2-pyrrolidone, and kneading them to prepare the positive electrode mixture, and then applying this positive electrode mixture to a current collector such as aluminum foil and lath plate made of stainless-steel, drying, pressure molding, and then subjecting the resultant to heat treatment at a temperature of about 50°C to 250°C for about 2 hours under vacuum.

The density of parts excluding the current collector of the positive electrode is ordinarily 1.5 g/cm³ or more, preferably 2 g/cm³ or more, more preferably 3 g/cm³ or more, and further preferably 3.6 g/cm³ or more in order to further enhance the capacity of the battery. Meanwhile, the upper limit is preferably 4 g/cm³ or less.

As for the negative electrode active material for a lithium secondary battery, lithium metal, lithium alloy, and a carbon material capable of absorbing and releasing lithium (graphitizable carbon, non-graphitizable carbon having 0.37 nm or more of the spacing of the (002) plane, graphite having 0.34 nm or less of the spacing of the (002) plane, etc.], tin (simple substance), a tin compound, silicon (simple substance), and a silicon compound can be used alone in one kind or in combination of two or more kinds.

Among the negative electrode active materials, considering absorbance and releasing ability with respect to lithium ions, high-crystalline carbon material such as artificial graphite, natural graphite, or the like is more preferably used, and further preferably, carbon material having a graphite crystal structure where a space (d₀₀₂) between lattice planes (002) is 0.340 nm (nanometer) or less and particularly 0.335 to 0.337 nm is used. Particularly, an artificial graphite particle having a blocky structure where a plurality of flat graphite fine particles are non-parallelly assembled or bonded and a particle obtained by performing spheroidization processing to a scale-like natural graphite by repeatedly applying mechanical actions such as compressive force, frictional force, and shear force are preferably used.

A ratio between a peak intensity I(110) of a (110) plane of a graphite crystal obtained by X-ray diffractometry of a negative electrode sheet where density of parts excluding a current collector of the negative electrode is set to 1.5 g/cm³ or more by press molding and a peak intensity I(004) of a (004) plane, which is I(110)/I(004), is preferably 0.01 or more as electrochemical properties at high temperature can be enhanced even further, more preferably 0.05 or more, and further preferably 0.1 or more. Also, the upper limit for the peak intensity ratio I(110)/I(004), is preferably 0.5 or less, and more preferably 0.3 or less since crystallinity may decrease due to excessive processing and discharge capacity of a battery may decrease.

Additionally, high crystalline carbon material (core material) is preferably coated with carbon material with low crystallinity than the core material as electrochemical properties at high temperature become even better. Crystallinity of the coating carbon material can be confirmed with TEM.

When carbon material with high crystallinity is used, electrochemical properties at low temperature or high temperature tend to decrease by an increase of interfacial resistance due to reaction with the nonaqueous electrolytic solution during charge, however, in the lithium secondary battery according to the present invention, electrochemical properties at high temperature become excellent.

As for a metal compound capable of absorbing and releasing lithium as a negative electrode material, a compound containing at least one kind of metal element such as Si, Ge, Sn, Pb, P, Sb, Bi, Al, Ga, In, Ti, Mn, Fe, Co, Ni, Cu, Zn, Ag, Mg, Sr, and Ba, etc., may be suitably mentioned. Such metal compounds may be used singly or in any other form such as alloy, oxide, nitride, sulfide, boride, or alloy with lithium. However, the one in single use, alloy, oxide, or alloy with lithium is preferable as the capacity can be increased. In particular, the one containing at least one kind of element selected from a group consisting of Si, Ge, and Sn is preferable and the one containing at least one kind of element selected from a group consisting of Si and Sn is more preferable as the capacity of a battery can be increased.

The negative electrode can be manufactured by kneading using the same conductive material, binder, and high boiling-point solvent as used in manufacturing of the positive electrode prepared as a negative electrode mixture, then applying this negative electrode mixture to a copper foil or the like of the current collector, drying, pressure molding, and then subjecting the resultant to heat treatment at a temperature of about 50°C to 250°C for about 2 hours under vacuum.

The density of parts other than the current collector of the negative electrode is generally 1.1 g/cm³ or more, and preferably 1.5 g/cm³ or more and more preferably 1.7 g/cm³ or more to further raise the battery capacity. The upper limit thereof is preferably 2 g/cm³ or less.

As a negative electrode active material for a lithium primary battery, lithium metal or lithium alloy can be mentioned.

The separator for the battery is not particularly limited, but a unilamellar or laminated microporous film of a polyolefin such as polypropylene, polyethylene, an ethylene-propylene copolymer, a woven fabric cloth, or a nonwoven fabric cloth, etc. may be used. As for lamination of polyolefin, it is preferable to laminate polyethylene and polypropylene, and particularly a triple-layer structure of polypropylene/polyethylene/polypropylene is more preferable.

The thickness of the separator is preferably 2 µm or more, more preferably 3 µm or more, and further preferably 4 µm. The upper limit thereof is 30 µm or less, preferably 20 µm or less, and more preferably 15 µm or less.

To one surface or both surfaces of the separator, a heat-resistant layer including an inorganic particle and/or organic particle and a binder is preferably arranged. The thickness of the heat-resistant layer is preferably 0.5 µm or more, more preferably 1 µm or more, and further preferably 1.5 µm or more. Also, the upper limit thereof is 7 µm or less, preferably 6 µm or less, and more preferably 5 µm or less.

As for an inorganic particle contained in the heat-resistant layer, an oxide containing an element selected from Al, Si, Ti, and Zr or a hydroxide may be suitably mentioned.

As specific examples of the inorganic particle, one or more kinds selected from a group consisting of oxides of silica (SiO₂), alumina (Al₂O₃), titania (TiO₂), zirconia (ZrO₂), or BaTiO₃, etc., and hydroxides such as boehmite (Al₂O₃·3H₂O), etc., can be suitably mentioned, and two or more kinds are more preferable. Among the above, one or more kinds selected from silica (SiO₂), alumina (Al₂O₃), zirconia (ZrO₂), BaTiO₃, and boehmite (Al₂O₃·3H₂O) are preferable, silica (SiO₂), alumina (Al₂O₃), BaTiO₃, and boehmite (Al₂O₃·3H₂O) are more preferable, and alumina (Al₂O₃), BaTiO₃, and boehmite (Al₂O₃·3H₂O) are particularly preferable.

As an organic particle contained in the heat-resistant layer, one or more kinds selected from high-polymer particles such as polyamide, aramid, and polyimide can be suitably mentioned, and two or more kinds are more preferable. In particular, one or more kinds selected from a group consisting of polyamide, aramid, and polyimide are preferable, and polyamide and aramid are more preferable.

As a binder included in the heat-resistant layer, one or more kinds selected from ethylene-vinyl acetate copolymer (EVA), ethylene-acrylic acid copolymer such as ethylene-ethylacrylate copolymer, polytetrafluoroethylene (PTFE), polyvinylidene fluoride (PVDF), fluorine rubber, styrene-butadiene rubber (SBR), carboxymethyl cellulose (CMC), hydroxyethyl cellulose (HEC), polyvinyl alcohol (PVA), polyvinyl butyral (PVB), polyvinyl pyrolidone (PVP), poly N-vinyl acetamide, crosslinked acrylic resin, polyurethane, and epoxy resin can be suitably mentioned, and two or more kinds are more preferable Among the above, one or more kinds selected from ethylene-acrylic acid copolymer such as ethylene-ethylacrylate copolymer or the like, polyvinyl pyrolidone (PVP), poly N-vinyl acetamide, polyvinylidene fluoride (PVDF), styrene butadiene copolymer(SBR), and carboxymethyl cellulose (CMC) are preferable.

The structure of the lithium battery is not particularly limited, and the structure of a coin-type battery, a cylinder-type battery, a square-shaped battery, or a laminate-type battery, etc., can be applied.

The lithium secondary battery according to the present invention is excellent in the electrochemical properties at high temperature even when the charge termination voltage is 4.2 V or more, and particularly when 4.3 V or more. Also, the properties are favorable even when the charge termination voltage is 4.4 V or more. The discharge termination voltage is usually 2.8 V or more, and further can be set to 2.5 V or more. However, for the lithium secondary battery according to the present invention, a discharge termination voltage of 2.0V or more can be used. The current value is not particularly limited, but usually a value within a range of 0.1 to 30 C is used. Further, the lithium battery according to the present invention can be charged and discharged at -40 to 100°C, and preferably at -10 to 80°C.

In the present invention, as a countermeasure for a rise of the inner pressure of the lithium battery, a method of arranging a safety valve to a cover of the battery or making incision on a member such as a battery can or gasket may be also adopted. Further, as a safety countermeasure for preventing overcharge, current shutoff mechanism that shuts off the current upon perception of the inner pressure of the battery may be arranged on the cover of the battery.

### [Second Energy Storage Device (Electrical Double-layer Capacitor)]

The second energy storage device of the present invention contains the nonaqueous electrolytic solution of the present invention, and is an energy storage device for storing energy using electrical double-layer capacity at the interface of the electrolytic solution and electrode. An example of the present invention is an electrical double-layer capacitor. The most typical electrode active material used in the energy storage device is activated carbon. Generally, the double-layer capacity increases proportionally to the surface area.

### [Third Energy Storage Device]

The third energy storage device of the present invention contains the nonaqueous electrolytic solution of the present invention, and is an energy storage device storing energy using dope/de-dope reaction of an electrode. As for an electrode active material used in the energy storage device, a metal oxide such as ruthenium oxide, iridium oxide, tungsten oxide, molybdenum oxide, copper oxide, etc., and a π conjugated polymer such as polyacene, polythiophene derivative, etc., can be mentioned. A capacitor that utilizes these electrode active materials can store energy involved by dope/de-dope reaction of the electrode.

### [Fourth Energy Storage Device (Lithium Ion Capacitor)]

The fourth energy storage device of the present invention contains the nonaqueous electrolytic solution of the present invention, and is an energy storage device that stores energy using intercalation of lithium ions to carbon material such as graphite, which is a negative electrode. The fourth energy storage device is called as lithium ion capacitor (LIC). As for the positive electrode, for example, the one using an electrical double layer between an activated carbon electrode and electrolytic solution, and the one using dope/de-dope reaction of a π conjugated polymer electrode, and the like can be mentioned. To the electrolytic solution, at least lithium salt such as LiPF₆ is contained.

### Examples

### Example 1 to Example 24 and Comparative Example 1 to Comparative Example 6

### [Manufacturing of Lithium Ion Secondary Battery]

LiNi_{0.5}Mn_{0.3}CO_{0.2}O₂; 93% by mass and acetylene black (conductive agent); 4% by mass were mixed and then added and mixed to a solution prepared in advance by mixing polyvinylidene fluoride (a binder); 3% by mass to 1-methyl 2-pyrolidone to prepare a positive electrode mixture paste. The positive electrode mixture paste was applied to one surface on an aluminum foil (current collector), dried, pressure treated, and then cut to a certain size to obtain a belt-like positive electrode sheet. The density of positive electrode parts except the current collector was 3.6 g/cm³. Also, silicon (simple substance); 5% by mass, artificial graphite (d₀₀₂=0.335 nm, negative electrode active material); 85% by mass, and acetylene black (conductive agent); 5% by mass were mixed and then added and mixed to a solution prepared in advance by dissolving polyvinylidene fluoride (a binder); 5% by mass to 1-methyl-2-pyrolidone to prepare a negative electrode mixture paste. The negative electrode mixture paste was applied to one surface on a copper foil (current collector), dried, pressure treated, and cut into a certain size to obtain a negative electrode sheet. The density of negative electrode parts other than the current collector was 1.5 g/cm³. Also, from the results measured by X-ray diffractometry using the electrode sheet, a ratio between a peak intensity I(110) of the (110) plane of a graphite crystal and peak intensity I(004) of the (004) plane, that is [I(110)/I(004)], was 0.1. Then, the positive electrode sheet, a separator made with a microporous polyethylene film, and the negative electrode sheet were laminated in this order, and by adding a nonaqueous electrolytic solution having a composition described in Table 1 and Table 2, a laminated-type battery was prepared. Additionally, concentrations of HF contained in nonaqueous electrolytic solutions of Example 1 and Example 2 were adjusted to 34 ppm (HF concentration/sum total of the concentration of the second lithium salts containing fluorine ≈1/313 (mass ratio)) and 9 ppm (HF concentration/sum total of the concentration of the second lithium salts containing fluorine ≈1/1177 (mass ratio)) respectively.

### [Evaluation of Capacity retention rate after High Temperature Charge and Storage]

### <Initial Discharge Capacity>

Using the laminated-type battery manufactured by the above-mentioned method, in a 25°C constant-temperature bath, the laminated-battery was charged for 3 hours at 1 C constant current and constant voltage up to a termination voltage of 4.4 V, and then discharged to a cut-off voltage of 2.75 V at 1 C constant current to obtain an initial discharge capacity at 25°C.

### <Test for High Temperature Charge and Storage>

Next, in a 60°C constant-temperature bath, the laminated-type battery was charged for 3 hours up to a termination voltage of 4.4 V at 1 C constant current and constant voltage, and stored for 1 week while maintaining a 4.4 V state. Then, the laminated-type battery was put into a 25°C constant-temperature bath, and once discharged to a cut-off voltage of 2.75 V under 1 C constant current.

### <Discharge Capacity after High Temperature Charge and Storage>

Then, following the above, as in measurement of an initial discharge capacity, a discharge capacity at 25°C after high temperature charge and storage was determined.

### <Capacity retention rate after High Temperature Charge and Storage>

A capacity retention rate after charge and storage at high temperature was determined from the following retention rate of the discharge capacity at 25°C.

Capacity retention rate (%) after high temperature charge and storage = (discharge capacity at 25°C after high temperature charge and storage / initial discharge capacity at 25°C)×100.

### [Evaluation of Impedance after High Temperature Charge and Storage]

For the battery charged and stored at high temperature, in a 0°C constant-temperature bath, impedance was measured using a 1 kHz frequency. Then, regarding the impedance of Comparative Example 1 as 100, resistance ratio was determined with the following formula.

Resistance ratio (%) = (impedance / impedance of Comparative Example 1)×100 The results are shown in Tables 1 to 3.
[Table 1]

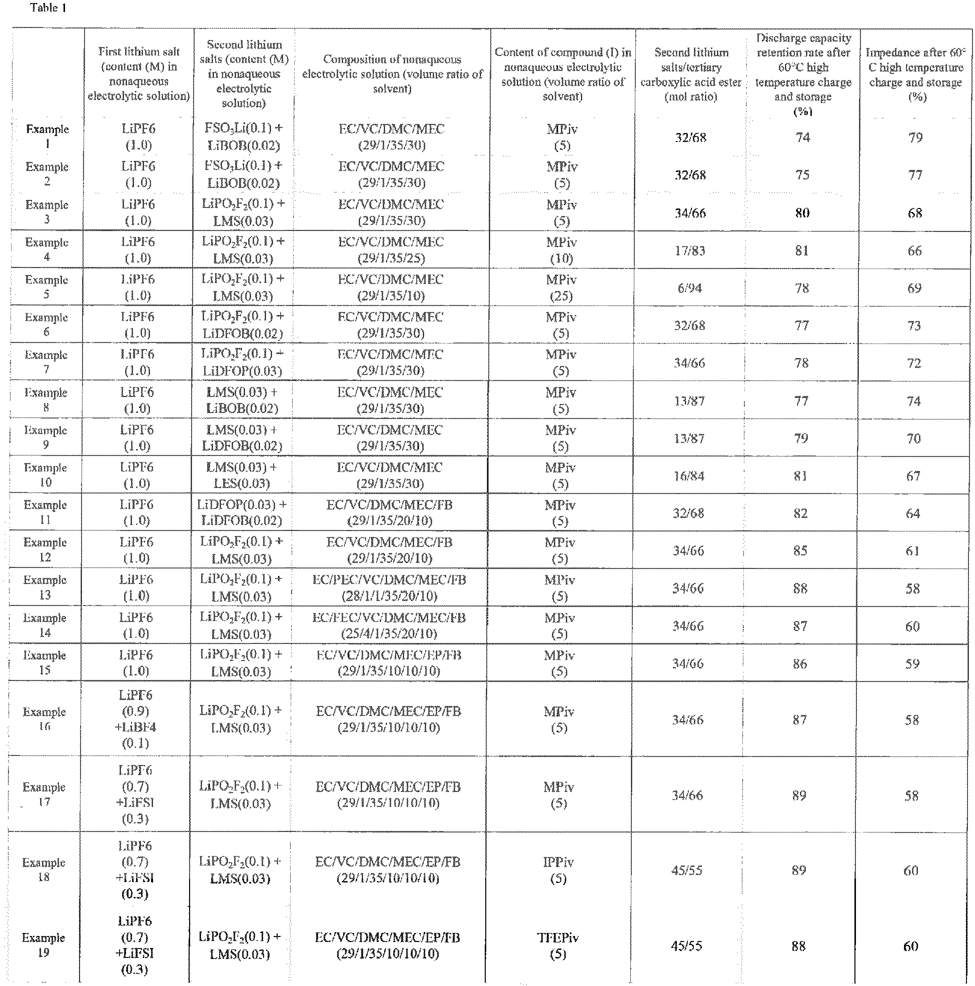

[Table 2]

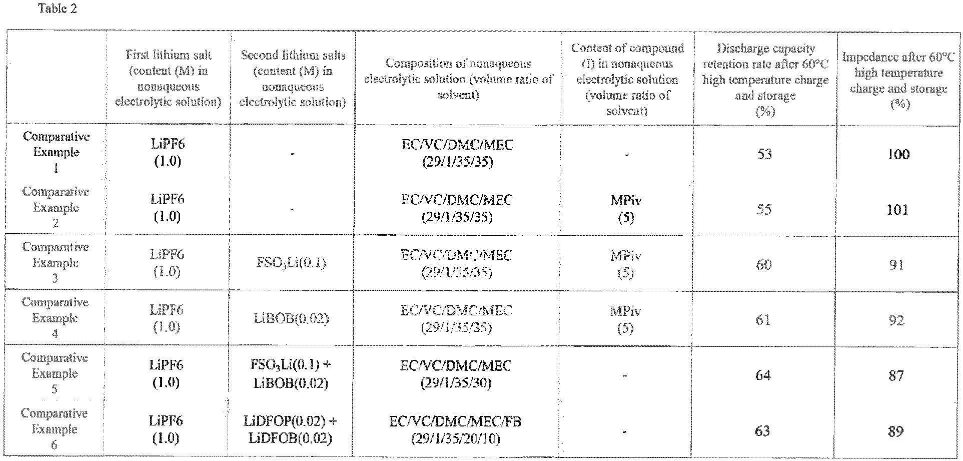

[Table 3]

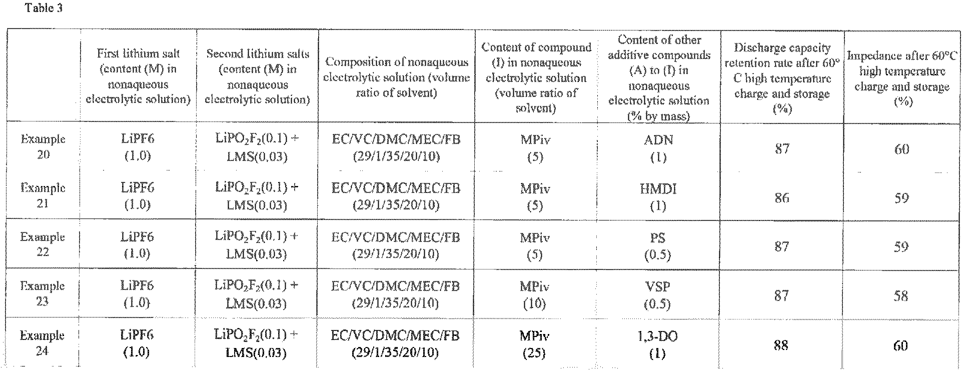

### Example 25 and Comparative Example 7 to Comparative Example 9

Instead of the positive electrode active material used in Example 1 and Comparative Example 1, Comparative Example 2, and Comparative Example 5, a positive electrode sheet was prepared using LiNi_{1/2}Mn_{3/2}O₄(positive electrode active material). LiNi_{1/2}Mn_{3/2}O₄; 94% by mass and acetylene black (conductive agent); 3% by mass were mixed and added and mixed with a solution prepared by dissolving polyvinylidene fluoride (a binder); 3% by mass into 1-methyl-2-pyrolidone in advance and a positive electrode mixture paste was prepared. A laminated-type battery was prepared in the same way as in Example 1, Comparative Example 1, Comparative Example 2, and Comparative Example 5, except that a positive electrode sheet was prepared by applying the positive electrode mixture paste to one surface on an aluminum foil (current collector), drying, treating with pressure, and cutting into a certain size, charge termination voltage for evaluation of the battery was set to 4.9 V, and discharge termination voltage was set to 2.7 V. Then, evaluations for the battery were performed. More, as for the evaluation of impedance after charge and storage at high temperature, resistance ratio was determined by regarding the impedance of Comparative Example 7 as 100. The results are shown in Table 4.
[Table 4]

**Table 4**

| | First lithium salt (content (M) in nonaqueous electrolytic solution) | Second lithium salts (content (M) in nonaqueous electrolytic solution) | Composition of nonaqueous electrolytic solution (volume ratio of solvent) | Content of compound (I) in nonaqueous electrolytic solution (volume ratio of solvent) | Discharge capacity retention rate after 60° C high temperature charge and storage (%) | Impedance alter 60°C higt temperature charge and storage (%) |
|---|---|---|---|---|---|---|
| Example 25 | LiPF6 (1.0) | FSO₃Li(0.1) + LiBOB(0.02) | EC/VC/DMC/MEC (29/1/35/30) | MPiv (5) | 62 | 83 |
| Comparative Example 7 | LiPF6 (1.0) | - | EC/VC/DMC/MEC (29/1/35/35) | - | 41 | 100 |
| Comparative Example 8 | LiPF6 (1.0) | - | EC/VC/DMC/MEC (29/1/35/35) | MPiv (5) | 44 | 99 |
| Comparative Example 9 | LiPF6 (1.0) | FSO₃Li(0.1) + LiBOB(0.02) | EC/VC/DMC/MEC (29/1/35/30) | - | 50 | 90 |

### Example 26 and Comparative Example 10 to Comparative Example 12

Instead of the negative electrode active material used in Example 1 and Comparative Example 1, Comparative Example 2, and Comparative Example5, a negative electrode sheet was prepared using lithium titanate Li₄Ti₅O₁₂(negative electrode active material). Lithium titanate Li₄Ti₅O₁₂; 80% by mass and acetylene black (conductive agent); 15% by mass were mixed and then added and mixed with a solution prepared in advance by dissolving polyvinylidene fluoride (a binder); 5% by mass into 1-methyl-2-pyrolidone and a negative electrode mixture paste was prepared. A laminated-type battery was prepared in the same way as in Example 1, Comparative Example 1, Comparative Example 2, and Comparative Example 5, except that a negative electrode sheet was prepared by applying the negative electrode mixture paste to one surface on a copper leaf (current collector), drying, treating with pressure, and cutting into a certain size, charge termination voltage for evaluation of the battery was set to 2.8 V, and discharge termination voltage was set to 1.2 V. Then, evaluations for the battery were performed. More, as for the evaluation of impedance after charge and storage at high temperature, resistance ratio was determined by regarding the impedance of Comparative Example 10 as 100. The results are shown in Table 5.
[Table 5]

**Table 5**

| | First lithium salt (content (M) in nonaqueous electrolytic solution) | Second lithium salts (content (M) in nonaqueous electrolytic solution) | Composition of nonoqueous electrolytic solution (volume ratio of solvent) | Content of compound (I) in nonaqueous electrolytic solution (volume ratio of solvent) | Discharge capacity retention rate after 60°C high temperature charge and storage | Impedance after 60°C temperature charge and storage (%) |
|---|---|---|---|---|---|---|
| Example 26 | LiPF₆ (1.0) | FSO₃Li(0.1) + LiBOB(0.02) | EC/VC/DMC/MEC (29/1/35/30) | MPiv (5) | 90 | 71 |
| Comparative Example 10 | LiPF6 (1.0) | - | EC/VC/DMC/MEC (29/1/35/35) | - | 74 | 100 |
| Comparative Example 11 | LiPF6 (1.0) | - | EC/VC/DMC/MEC (29/1/35/35) | MPiv (5) | 76 | 100 |
| Comparative Example 12 | LiPF6 (1.0) | FSO₃Li(0.1)+ LiBOB(0.02) | EC/VC/DMC/MEC (29/1/35/30) | - | 81 | 88 |

The lithium secondary batteries of Example 1 to Example 24 all exhibited improvement in discharge capacity retention rate after high temperature storage and suppressed increase of impedance after high temperature storage compared to Comparative Example 1 where the nonaqueous electrolytic solution of the present invention does not include certain second lithium salts and certain tertiary carboxylic acid ester, Comparative Example 2 where only certain tertiary carboxylic acid ester is contained, Comparative Example 3 and Comparative Example 4 where only one kind selected from certain second lithium salts is contained, and Comparative Example 5 and Comparative Example 6 where only two kinds selected from certain secondary lithium salts are contained. As can be seen from the above, it was found that the effects of improving a capacity retention rate after high temperature storage and suppressing increase of impedance after high temperature storage of the present invention are the effects peculiar to a case where at least one kind of the first lithium salt is contained in the nonaqueous electrolytic solution, at least two kinds of the second lithium salts selected from a group consisting of lithium salts having an oxalic acid structure, lithium salts having a phosphoric acid structure, and lithium salts including a S=O group are included, and also when at least one kind of tertiary carboxylic acid ester represented by the general formula (I) is included.

Further, from the comparisons between Example 25 and Comparative Example 7 to Comparative Example 9 where nickel manganic acid lithium salt (LiNi_{1/2}Mn_{3/2}O₄) was used for the positive electrode, and from the comparisons with Example 26 and Comparative Example 10 to Comparative Example 12 where lithium titanate (Li₄Ti₅O₁₂) was used for the negative electrode, a similar effect was observed. Accordingly, it is apparent that the effects of the present invention are not dependent on a particular positive electrode and negative electrode.

Furthermore, the nonaqueous electrolytic solution of the present invention also provides an effect of improving discharge properties for a case where a lithium primary battery is used at high temperature.

### Industrial Applicability

An energy storage device using the nonaqueous electrolytic solution of the present invention is useful as an energy storage device of a lithium secondary battery or the like having excellent electrochemical properties when the battery is used at high temperature.

## Claims

1. A nonaqueous electrolytic solution in which an electrolyte salt is dissolved to a nonaqueous solvent, wherein
the electrolyte salt includes at least one kind of a first lithium salt selected from a group consisting of LiPF₆, LiBF₄, LiN(SO₂F)₂, LiN(SO₂CF₃)₂, and LiN(SO₂C₂F₅)₂, and at least two kinds of second lithium salts selected from a group consisting of a lithium salt having an oxalic acid structure, a lithium salt having a phosphoric acid structure, and a lithium salt including a S=O group, and
at least one kind of tertiary carboxylic acid ester represented by the following general formula (I) is contained: 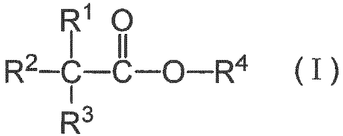 where, in the formula, each of R¹ to R³ independently represents a methyl group or ethyl group, and R⁴ represents a C₁ to C₆ alkyl group in which at least one hydrogen atom is substituted or not substituted by a halogen atom.

2. The nonaqueous electrolytic solution according to claim 1, wherein the nonaqueous solvent contains chain carboxylic acid ester (excluding those corresponding to tertiary carboxylic acid ester represented by a general formula (I)).

3. The nonaqueous electrolytic solution according to claim 2, wherein kinetic viscosity of the chain carboxylic acid ester at 25°C is 0.75 cSt or less.

4. The nonaqueous electrolytic solution according to claim 3, wherein the chain carboxylic acid ester is any one or more kinds selected from methyl propionate, ethyl propionate, propyl propionate, methyl acetate, ethyl acetate, and propyl acetate.

5. The nonaqueous electrolytic solution according to any one of claims 1 to 4, wherein the nonaqueous solvent includes at least one kind of benzene compound substituted by fluorine represented by a following general formula (II): 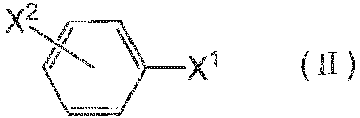 where, in the formula, X¹ represents a fluorine atom and X² represents a hydrogen atom or a fluorine atom.

6. The nonaqueous electrolytic solution according to claim 5, wherein the benzene compound substituted by fluorine is at least one kind selected from fluorobenzene and 1,4-difluorobenzene.

7. The nonaqueous electrolytic solution according to any one of claims 1 to 6, wherein the lithium salt having an oxalic acid structure is at least one kind selected from lithium bis(oxalato)borate, lithium difluoro (oxalato)borate, lithium tetrafluoro (oxalato)phosphate, and lithium difluoro bis(oxalato)phosphate.

8. The nonaqueous electrolytic solution according to any one of claims 1 to 7, wherein the lithium salt having a phosphoric acid structure is at least one kind selected from lithium difluorophosphate and lithium fluorophosphate.

9. The nonaqueous electrolytic solution according to any one of claims 1 to 8, wherein the lithium salt including a S=O group is at least one kind selected from lithium methyl sulfate, lithium ethyl sulfate, lithium 2,2,2-trifluoro ethyl sulfate, lithium trifluoro ((methanesulfonyl)oxy)borate, lithium pentafluoro ((methanesulfonyl)oxy)phosphate, and fluorosulfonate lithium.

10. The nonaqueous electrolytic solution according to any one of claims 1 to 9, wherein the tertiary carboxylic acid ester represented by a general formula (I) is at least one kind selected from methyl pivalate, ethyl pivalate, n-propyl pivalate, n-butyl pivalate, iso-propyl pivalate, 2,2-difluoroethyl pivalate, 2,2,2-trifluoroethyl pivalate, and 2,2,3,3-tetrafluoro n-propyl pivalate.

11. The nonaqueous electrolytic solution according to any one of claims 1 to 10, wherein a concentration of the first lithium salt is 0.3 M or more and 2.5 M or less with respect to the nonaqueous solvent.

12. The nonaqueous electrolytic solution according to any one of claims 1 to 11, wherein a concentration of the second lithium salt is 0.01 M or more and 0.4 M or less with respect to the nonaqueous solvent.

13. The nonaqueous electrolytic solution according to any one of claims 1 to 12, wherein a content of the tertiary carboxylic acid ester represented by the general formula (I) in the nonaqueous solvent is 0.5 to 40% by volume.

14. The nonaqueous electrolytic solution according to any one of claims 1 to 13, wherein a ratio of mol concentration of the second lithium salt to mol concentration of the tertiary carboxylic acid ester represented by the general formula (I) is 1:99 to 49:51 in terms of "second lithium salts":"tertiary carboxylic acid ester."

15. The nonaqueous electrolytic solution according to any one of claims 1 to 14, wherein the nonaqueous solvent contains a cyclic carbonate and chain carbonate.

16. The nonaqueous electrolytic solution according to claim 15, wherein the cyclic carbonate is one or more kinds selected from a group consisting of ethylene carbonate, propylene carbonate, 4-fluoro-1,3-dioxolane-2-one, vinylene carbonate, vinyl ethylene carbonate, 2-propynyl-2-oxo-1,3-dioxolane-4-carboxylate, and 4-ethynyl-1,3-dioxolane-2-one.

17. The nonaqueous electrolytic solution according to claim 15 or 16, wherein the chain carbonate is one or more kinds selected from one or more kinds of asymmetrically chain carbonates selected from a group consisting of methyl ethyl carbonate, methyl propyl carbonate, methyl isopropyl carbonate, methyl butyl carbonate, and ethyl propyl carbonate, and one or more kinds of symmetrically chain carbonates selected from a group consisting of dimethyl carbonate, diethyl carbonate, dipropyl carbonate, and dibutyl carbonate.

18. The nonaqueous electrolytic solution according to any one of claims 1 to 17, wherein at least one or more kinds selected from a nitrile compound, an aromatic compound, an isocyanate compound, a compound containing a triple bond, a cyclic or chain compound including a S=O group, a cyclic acetal compound, a phosphorus-containing compound, cyclic acid anhydride, and a cyclic phosphazene compound.

19. An energy storage device comprising a positive electrode, a negative electrode, and a nonaqueous electrolytic solution in which an electrolyte salt is dissolved to a nonaqueous solvent, wherein
the electrolyte salt includes at least one kind of a first lithium salt selected from a group consisting of LiPF₆, LiBF₄, LiN(SO₂F)₂, LiN(SO₂CF₃)₂, and LiN(SO₂C₂F₅)₂, at least two kinds of second lithium salts selected from a group consisting of a lithium salt having an oxalic acid structure, a lithium salt having a phosphoric acid structure, and a lithium salt including a S=O group, and
the nonaqueous electrolytic solution includes at least one kind of tertiary carboxylic acid ester represented by the following general formula (I): 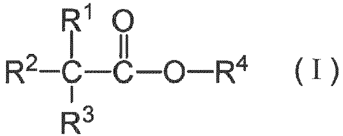 where, in the formula, each of R¹ to R³ independently represents a methyl group or ethyl group, and R⁴ represents a C₁ to C₆ alkyl group in which at least one hydrogen atom is substituted or not substituted by a halogen atom.

20. The energy storage device according to claim 19, wherein
the positive electrode includes at least one kind selected from lithium complex metal oxide and lithium-containing olivine-type phosphoric acid salt as a positive electrode active material, and
the negative electrode includes at least one kind selected from a lithium metal, a lithium alloy, a carbon material capable of absorbing and releasing lithium, and a metal compound capable of absorbing and releasing lithium, as a negative electrode active material.
